Europäisches Patentamt

European Patent Office

Office européen des brevets

(19)

(11) Publication number: **0 049 163**
**B1**

(12) **EUROPEAN PATENT SPECIFICATION**

(45) Date of publication of patent specification: 04.07.84

(21) Application number: 81304511.9

(22) Date of filing: 29.09.81

(51) Int. Cl.³: **G 03 B 27/64,**
**G 03 G 15/00**

(54) Document handling apparatus.

(30) Priority: 29.09.80 US 191560

(43) Date of publication of application:
07.04.82 Bulletin 82/14

(45) Publication of the grant of the patent:
04.07.84 Bulletin 84/27

(84) Designated Contracting States:
DE FR GB

(56) References cited:
US - A - 3 937 454
US - A - 4 033 694

(73) Proprietor: XEROX CORPORATION
Xerox Square - 020
Rochester New York 14644 (US)

(72) Inventor: Silverberg, Morton
23 Old Pond Road
Rochester New York 14625 (US)

(74) Representative: Goode, Ian Roy et al,
European Patent Attorney c/o Rank Xerox Limited
Patent Department 338 Euston Road
London NW1 3BH (GB)

Courier Press, Leamington Spa, England.

## Description

This invention relates to a document handling apparatus of the type in which a document is transported to an imaging station of a copying machine, such as an electrophotographic printing machine. Such an apparatus typically includes air permeable means for advancing the document to the imaging station, and vacuum means in communication with the air permeable means for retaining the document thereon.

Generally, electrophotographic printing comprises charging a photoconductive member to a substantially uniform potential so as to sensitize the surface thereof. The charged portion of the photoconductive surface is exposed to a light image of the original document being reproduced. The original document is advanced to the exposure station by the document handling system. In this way, an electrostatic latent image is recorded on the photoconductive member which corresponds to the informational areas contained within the original document. The latent image is developed by bringing a developer material into contact therewith. A powder image is thus formed on the photoconductive member which is subsequently transferred to a sheet of support material. The sheet of support material is then heated to permanently affix the powder image thereto.

For the higher speed electrophotographic printing machines now in commercial use, it is increasingly desirable to provide for the automatic handling of individual original documents being copied in order to utilize these copiers to the fullest extent. However, the characteristics of the original documents can vary widely, i.e. in size, weight, thickness, material, condition, humidity, age, etc. These documents may have curls, wrinkles, tears, cutouts, overlays, paste ups, tapes, staples, abrasive areas or other irregularities. Under all of these conditions it is desirable to be able to semi-automatically or automatically copy a set of such documents. Moreover, the document handling system should be relatively compact and inexpensive. Preferably, the document handling system is one which may be positionable over an existing or conventional external transparent copying platen of an electrophotographic printing machine. In this way, the same optical system of printing machine may be utilized for either automatic or manual copying. Presently, there are various types of document handling systems which move original documents over the platen. These may be made from single or multiple belts which utilize vacuum retaining forces to secure the document against the belt. Generally, the belt has vacuum apertures therein. When a belt is employed having apertures therein, means must be taken to prevent reproduction of the belt apertures. Vacuum apertures in the belt can produce shadows which "show through" translucent documents being copied and/or "show around" any misregistered or undersized documents. Normal dirt contamination (darkening) or belt surface irregularities aggravate these background problems.

Various approaches have been devised to minimize the effects of printing the background areas on the copies, as can be seen from the disclosures of the following U.S. Patents.

U.S. 3,677,643 discloses a copying machine including a cylindrical platen having a reflective supporting surface. An original document is interposed between the supporting surface and a translucent intermediate. The platen has a plurality of orifices so that air flowing inwardly therethrough secures the original document thereto. The walls of the orifices reflect incident light so that the orifice pattern will not be reproduced.

U.S. 3,863,912 describes a document feeder for advancing document from a stack into a copying position on an exposure platen of a copying machine. The document feeder includes an endless belt formed of a thin flexible sheet material. The material is opaque so that light will be reflected therefrom. The belt has a plurality of longitudinally extending parallel ridges for frictionally engaging and moving the document.

U.S. 3,963,345 discloses a document retaining web for use in a copying machine. The web is a substrate of thin, flexible plastic. The web is highly perforated rendering it air permeable. The air permeable main portion of the substrate may be covered with a thin layer of high friction material. This covering is on the document side to provide document support. Preferably, the cover is highly relfective and white in color.

U.S. 4,033,694 and 4,043,665 describe a document ejector which ejects the document from the platen of the exposure station of a copying machine. The document ejector includes an endless belt made from a finely apertured, non-stretching, plastic material. The belt outer surface is white (light reflecting) and extends uninterruptedly over the entire platen imaging area.

U.S. 4,047,812 discloses an endless vacuum belt for transporting a document on a copier platen. The belt has a multiplicity of small apertures extending over the entire surface thereof. Imperforate bands extend in the direction transverse to the movement of the belt. The bands are spaced apart a distance equal to the standard dimension of a standard document to provide an imperforate image background area of the belt for the edges of the standard documents.

U.S. 4,120,579 describes an apertured transport vacuum belt for moving successive documents past an exposure station of an electrophotographic printing machine. A multifaceted edge fadeout reflector is supported adjacent the side of the transparent belt opposite to the side which supports the document being reproduced. This illumination discharges the photoreceptor preventing development of border areas on the copy paper.

European Patent Publication No. 0,032,446 describes a document handling system in which an apertured reflective vacuum belt having grooves therein transports a document to an imaging station. The grooves have gently sloped side walls to avoid reproducable shadows. The belt apertures are spaced within the edges of the smallest document with the area of the vacuum being extended over the entire document by the unapertured portions of the grooves.

The Research Disclosure Journal, No. 19607, August 1980, page 319 discloses a vacuum transport feeder for transporting document pages seriatim across the exposure station of the reproducing apparatus. The feeder includes a vacuum plenum located adjacent the platen of the exposure station with an apertured belt passing therebetween to advance the documents onto the platen. The belt and plenum are light reflective to form a reflecting surface which prevents light trapping.

The present invention is intended to provide an improved document handling apparatus in which the background effects described above are minimised. The document handling apparatus of the invention is characterised in that said air permeable means is optically transmissive to admit light rays transmitted thereto and said vacuum means is arranged to receive the light rays transmitted through said air permeable means and diffusely reflect light rays incident thereon back through said air permeable means.

An apparatus in accordance with the invention will now be described, by way of example, with reference to the accompanying drawings, in which:

Figure 1 is an elevational view, in section, showing the document handling system of the present invention;

Figure 2 is a plan view of the belt used in the Figure 1 document handling system; and

Figure 3 is an enlarged fragmentary sectional elevational view taken along the lines 3—3 of the Figure 2 belt.

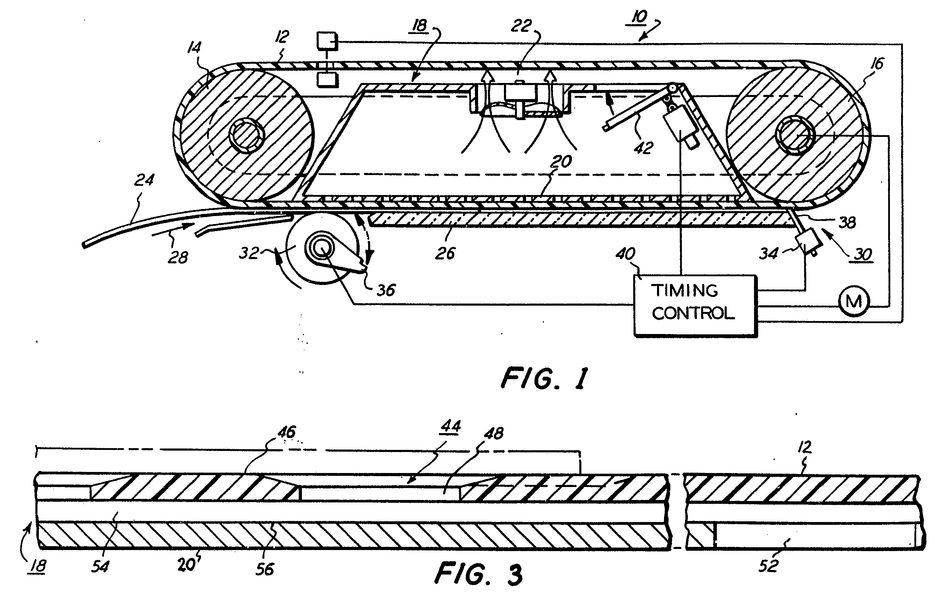

For a general understanding of the features of the present invention, reference is made to the drawings. In the drawings like reference numerals have been used throughout to designate identical elements. Figure 1 schematically depicts an illustrative document handling system for use in an electrophotographic printing machine for advancing original documents to the imaging station thereof. It will become evident from the following discussion that the document handling system of the present invention is equally well suited for use in a wide variety of printing machines and is not necessarily limited in its application to the particular embodiment depicted herein.

As shown in Figure 1, document handling apparatus 10 includes a document belt 12 supported and driven by rollers 14 and 16. The document handling system described hereinafter is a semi-automatic system which is illustrated for simplicity. However, it will be appreciated that the invention is fully applicable to various recirculating document handling systems used for pre-collation copying.

Document handling apparatus 10 includes a vacuum manifold 18 with an aperture plate 20 for applying a vacuum to the backside of an apertured vacuum document belt 12. Vacuum is provided by a blower 22. Document belt 12 and plate 20 are mounted so that a document 24 may be transported on belt 10 closely and evenly spaced above transparent platen 26 of the electrophotographic printing machine. The document may be copied within the depth of focus of the optical system of the electrophotographic printing machine through platen 26.

Document 24 is inserted onto belt 12 at a document input area station 28 positioned near the upstream end of belt 12, i.e. manually or automatically. The documents may then be ejected from an output area 30 located at the downstream end of belt 12 and platen 26. Alternatively, the belt drive may be reversed to eject the document from input area 28.

Document 24 may be registered on platen 26 through the utilization of a two registration gate system, an upstream registration gate 32 and downstream registration gate 34. Registration gates 32 and 34 have registration fingers 36 and 38, respectively, which move into and out of the path of document 24 for registration. Either one or both of the registration gates may be used. Both of the illustrated registration gates as well as belt drive M may be conveniently controlled by timing control 40. Preferably timing control 40 is incorporated in a general central copier microprocessor control with programming. However, timing and control may be provided by any desired logic system, commercial timing circuit, multiple lobe cams on a timing shaft, or any other suitable timing system which provides the desired sequence of events.

In one mode of registration, gate 32 pre-registers the document to a selected fixed position on the belt upstream of the platen. The document is then driven a fixed distance from gate 32 downstream over the platen without slippage. Copying takes place after advancement into the registration position. In a system of this type, downstream registration gate 34 is not required. However, if desired, it may be additionally provided for final or re-registration. Alternatively, only the downstream registration gate 34 would be utilized, i.e. the document would not be pre-registered. In this case, the document is driven by belt 12 over the platen until the lead edge of the document contacts raised registration fingers 38 which are positioned at the downstream edge of platen 26. The document slips relative to belt 12 so that it may deskew and be fully aligned against registration fingers 38. For this registration mode, there is provide an intermittently operable vacuum control valve 42. Valve 42 may be solenoid actuating by timing control 40. Opening of valve 42 reduces the vacuum in manifold 18 to permit the document on belt 12 to slip as it is being aligned by registration finger 38. This valving operation may also be done during initial loading or pre-registration of the document onto the belt at the input area 28.

Downstream registration gate 34 is conventionally opened by a solenoid or other actuator linearly pulling registration finger 38 out of the path of the document. After the document is copied, may be ejected in either direction from the platen by the belt drive. Upstream registration gate 32 conventionally operates by rotating into and out of the document path with a clutch driven cam or solenoid.

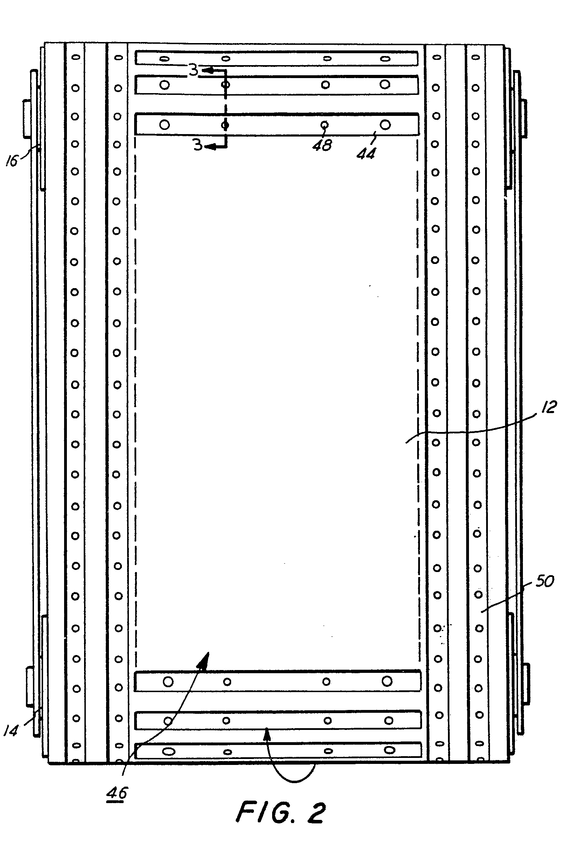

Referring now to Figure 2, a specific configuration of belt 12 will be described. As shown in Figure 2, belt 12 has a plurality of narrow, elongated, permanent shallow grooves 44. Grooves 44 extend linearly transverse to the direction of movement of belt 12. Grooves 44 are below the planar document transporting surface 46 of belt 12. Each groove 44 is narrower in width than the space across the intervening belt surface between adjacent grooves. Adjacent grooves are not connected to one another. In this way, adjacent grooves are pneumatically separated from one another. Preferably, all of the grooves have smooth and gently sloped side walls to minimize the effects of shadow reproduction on the copy. The light transmitting and scattering effect produced by the belt material minimizes edge shadows from the sides of the grooves. The base of the grooves are preferably not greater than approximately 1 millimeter in depth below the document transporting surface and preferably not greatly less than approximately 0.2 millimeters deep. Thus, the preferred grooves are effectively shallow and gentle slight undulations in the belt surface. The width of grooves 44 is preferably less than approximately 5 millimeters. This is sufficiently narrow to prevent documents from sagging or being pulled into contact with the base of the grooves.

The lateral or transverse alignment of belt 12 along the axes of rollers 14 and 16 may be achieved by the use of sprockets or V-grooves on rollers 14 and 16 mating with corresponding sprocket holes or grooves along at least one edge of belt 12. Preferably, belt 12 is made from an elastomeric material such as a flexible plastic, e.g. Mylar. Preferably, belt 12 is transparent. Alternatively, document support surface 46 of belt 12 is light emitting and diffusing, i.e. translucent. The translucent effect is produced by frosting surface 46. This is achieved by forming a fine-grained slightly roughened surface. Hence, document support surface 46 is fine-grained and slightly roughened to achieve a frosting effect which produces a translucent surface.

With continued reference to Figure 2, a limited number of vacuum apertures 48 are provided through belt 12 in the base area of each groove 44. Vacuum apertures 48 in belt 12 open at the image side, i.e. surface 46, of belt 12. However, apertures 48 are recessed within grooves 44. By placing apertures or holes 48 in the bottom of grooves 44, the apertures are substantially spaced from the document being transported on surface 46 of belt 12. Grooves 44 distribute the vacuum from holes 48 along the grooves under the document and towards the edges thereof. Each groove is a separate, independent vacuum area. By way of example, each groove is preferably about 0.1 millimeter deep and 6 millimeters wide with each groove having two holes 1.0 millimeters in diameter and two holes 5 millimeters in diameter. The smaller holes are located inside the smallest document. The larger holes are centrally located. Two grooves 50 may also be provided inside the largest document. These grooves are substantially identical to grooves 44 with the exception that they extend in a direction substantially parallel to the direction of the movement of belt 12.

In a system of this type, a relatively low parallel pressure vacuum system 22 (Figure 1) may be employed. For example, a manifold vacuum level of not substantially greater than 25 millimeters of water and an air flow of somewhat more than only $1.8$ times $10^{-3}$ cubic meters per second would be sufficient. This system allows an effective vacuum holding force with low pressures and low air flow rates. The hole diameter is small enough so that the manifold pressure will not significantly drop even if the vacuum holes are exposed. Yet, the holes need not be so small as to have significant clogging problems.

Improved document holding characteristics can be obtained by having a specific relationship between the opening area of holes 48 and the cross-sectional area of their respective groove 44. It has been found that by providing a higher resistance to air flow through or along groove 44 as compared to the air flow through aperture 48 in respective groove, that improved vacuum retention can be obtained. This is achieved by maintaining the total area of all of the vacuum holes 48 in each groove 44 greater than the total cross-sectional area of the groove itself.

Referring now to Figure 3, vacuum manifold 18 includes plate 20 which has a white, light reflective surface 56. Manifold plate 20 contains spaced vacuum apertures 52. Apertures 52 are pneumatically connected, i.e. open into spaced grooves 54 recessed in the outer manifold surface abutting the back of belt 12.

Apertures 52 are positioned outside the maximum document area. Grooves 54 in the manifold surface are oriented transversely to grooves 44 in belt 12. However, grooves 54 are aligned with holes 48 of grooves 44 in belt 12 to apply a vacuum thereto. Belt holes 48 are in linear rows in the direction of belt movement aligned with corresponding manifold grooves 54. Grooves 54 extend the full length of manifold plate 20 under the small belt holes and from about 10 millimeters to about 20 millimeters from the entry edge under the larger diameter holes. Thus, grooves 54 can communicate the vacuum through the manifold plate to all of smaller diameter holes 48 at any desired belt position and still provide a light reflective surface 56 under holes 48. The larger diameter holes acquire the document with the smaller diameter holes retaining the document as it travels across the platen. This approach minimizes air flow.

Belt 12 may be transparent or surface 46 of belt 12 may be a fine-grained roughened surface so as to be frosted. In this way, surface 46 is translucent, thereby admitting and diffusing light. When the belt is translucent, the holes in belt 12 under the document area do not show through because these holes cannot be resolved through the spaced diffusing surface of the document. Holes in the translucent vacuum belt outside the document area do not image because the translucent nature of the belt material directs light into the hole. This "light pipe" characteristic of the belt prevents the steep-walled vacuum holes from acting as a light sink which would trap incident radiation. In this way, the copy sheet does not reproduce any of the holes on the document belt. Hence, the "show-around" or "show-through" problem is overcome.

In recapitulation, it is apparent that the document handling system of the present invention employs a transparent or translucent belt backed by a light diffuse reflecting surface to prevent any imperfections or holes in the belt from being reproduced on the copy.

## Claims

1. A document handling apparatus of the type in which a document (24) is transported to an imaging station (26) of a copying machine, including air permeable means (12) for advancing the document to the imaging station and vacuum means (20) in communication with said air permeable means for retaining the document thereon, characterised in that said air permeable means is optically transmissive to admit light rays transmitted thereto, and said vacuum means is arranged to receive the light rays transmitted through said air permeable means and diffusely reflect light rays incident thereon back through said air permeable means.

2. An apparatus according to claim 1, wherein said air permeable means (12) comprises a belt for supporting the document on one surface thereof.

3. An apparatus according to claim 2, wherein said belt includes a translucent surface disposed at least in the area for supporting the document.

4. An apparatus according to claim 3, wherein the translucent surface of said belt is a fine-grained slightly roughened surface.

5. An apparatus according to claim 2, wherein said belt is substantially transparent.

6. An apparatus according to claim 4 or claim 5, wherein said vacuum means includes a white reflective surface (56) positioned closely adjacent to the surface of said belt opposed from the document supporting surface.

7. An apparatus according to claim 6, wherein said belt includes a plurality of grooves (44) in the document supporting surface with each groove having a plurality of apertures (48) therein in communication with said vacuum means.

8. An apparatus according to claim 7, wherein the total cross-sectional areas of the apertures in each of the grooves of said belt is sufficiently greater than the cross-sectional area of the groove so that the air flow restriction along the groove under the document is greater than the air flow restriction through the apertures into the groove.

9. An apparatus according to claim 8, wherein the grooves (44) of said belt extend in a direction transverse to the direction of movement of said belt.

10. An apparatus according to claim 9, wherein said belt includes at least a pair of grooves (50) extending in a direction substantially parallel to the direction of movement of said belt.

## Patentansprüche

1. Vorrichtung zur Handhabung von Dokumenten der Art, bei welcher ein Dokument (24) einer Abbildungsstation (26) einer Kopiermaschine zugeführt wird, mit einer luftdurchlässigen Einrichtung (12) zum Befördern des Dokumentes zur Abbildungsstation, und mit einer Vakuumeinrichtung (20), die mit der genannten luftdurchlässigen Einrichtung in Verbindung steht, um das Dokument darauf festzuhalten, dadurch gekennzeichnet, daß die genannte luftdurchlässige Einrichtung optisch durchlässig ist, um darauf übertragene Lichtstrahlen ein treten zu lassen, und daß die genannte Vakuumeinrichtung angeordnet ist, die durch die genannte luftdurchlässige Einrichtung hindurchgetretenen Lichtstrahlen zu empfangen und darauf auftreffende Lichtstrahlen zurück durch die genannte luftdurchlässige Einrichtung diffus zu reflektieren.

2. Vorrichtung nach Anspruch 1, in welcher die genannte luftdurchlässige Einrichtung (12) einen Gurt zum Tragen des Dokumentes an dessen einer Seite umfaßt.

3. Vorrichtung nach Anspruch 2, in welcher der genannte Gurt eine durchscheinende Fläche aufweist, die wenigstens im Bereich zum Halten des Dokuments angeordnet ist.

4. Vorrichtung nach Anspruch 3, in welcher die durchscheinende Fläche des genannten Gurts eine feinkörnige, leicht aufgerauhte Fläche ist.

5. Vorrichtung nach Anspruch 2, in welcher der genannte Gurt im wesentlichen transparent ist.

6. Vorrichtung nach Anspruch 4 oder Anspruch 5, in welcher die genannte Vakuumeinrichtung eine weiße, reflektierende Fläche (56) aufweist, die eng angrenzend and die der Dokumentenhaltefläche gegenüberliegende Fläche des genannten Gurts angeordnet ist.

7. Vorrichtung nach Anspruch 6, in welcher der genannte Gurt eine Mehrzahl von Rinnen (44) in der Dokumentenhaltefläche umfaßt, wobei jede Rinne eine Mehrzahl von darin ausgebildeten Öffnungen (48) aufweist, die in Verbindung mit der genannten Vakuumeinrichtung stehen.

8. Vorrichtung nach Anspruch 7, in welcher die gesamten Querschnittsflächen der Öffnungen in jeder der Rinnen des genannten Gurts ausreichend größer sind als die Querschnittsfläche der Rinne, so daß die Luftströmungsbeschränkung entlang der Rinne unter dem Dokument größer ist als die Luftströmungsbeschränkung durch die Öffnungen in der Rinne.

9. Vorrichtung nach Anspruch 8, in welcher die Rinnen (44) des genannten Gurts sich in einer Richtung quer zur Bewegungsrichtung des genannten Gurts erstrecken.

10. Vorrichtung nach Anspruch 9, in welcher der genannte Gurt wenigstens ein Paar von Rinnen (50) umfaßt, die sich in einer Richtung im wesentlichen parallel zur Bewegungsrichtung des genannten Gurts erstrecken.

**Revendications**

1. Appareil de manipulation de document d'un type dans lequel un document (24) est acheminé jusqu'à un poste de formation d'image (26) d'une machine de reproduction, comprenant un moyen perméable à l'air (12) pour faire avancer le document jusqu'au poste de formation d'image et un moyen sous vide (20) en communication avec le moyen perméable à l'air pour retenir le document sur son dessus, caractérisé en ce que le moyen perméable à l'air permet une transmission optique de manière à admettre les rayons lumineux qui lui sont transmis, et le moyen sous vide est disposé de manière à recevoir les rayons lumineux transmis par l'intermédiaire du moyen perméable à l'air et réfléchir par diffusion les rayons lumineux tombant dessus pour les renvoyer par l'intermédiaire du moyen perméable à l'air.

2. Appareil selon la revendication 1, où le moyen perméable à l'air (12) comprend une courroie pour supporter le document sur l'une de ses surfaces.

3. Appareil selon la revendication 2, où la courroie comprend une surface translucide disposée au moins dans la surface de support du document.

4. Appareil selon la revendication 3, où la surface translucide de la courroie est une surface légèrement rugueuse au grain fin.

5. Appareil selon la revendication 2, où la courroie est sensiblement transparente.

6. Appareil selon la revendication 4 ou la revendication 5, où le moyen sous vide comprend une surface réfléchissante blanche (56) placée en en endroit étroitement contigu à la surface de la courroie opposée à la surface de support de document.

7. Appareil selon la revendication 6, où la courroie comprend une pluralité de rainures (44) dans la surface de support de document, avec chaque rainuure avant une pluralité d'ouvertures (48) en communication avec le moyen sous vide.

8. Appareil selon la revendication 7, où la surface totale en coupe des ouvertures de chacune des rainures de la courroie est suffisamment supérieure à la surface en coupe de la rainure pour que la limitation du courant d'air le long de la rainure sous le document soit supérieure à la limitation du courant d'air à travers les ouvertures débouchant dans la rainure.

9. Appareil selon la revendication 8, où les rainures (44) de la courroie s'étendent dans une direction transversale au sens de déplacement de la courroie.

10. Appareil selon la revendication 9, où la courroie comprend au moins une paire de rainures (50) s'étendant dans une direction sensiblement parallèle au sens de déplacement de courroie.

*FIG. 1*

*FIG. 3*

FIG. 2